# EUROPEAN PATENT SPECIFICATION

(11) **EP 3 116 742 B1**
(45) Date of publication and mention of the grant of the patent: **31.01.2018**
(21) Application number: 15709468.1
(22) Date of filing: 10.03.2015
(51) Int. Cl.: B60L 11/18, B60L 3/00, H02H 3/00, H02J 7/00, H02J 7/02

(54) **POWER SUPPLY SYSTEM FOR CHARGING ELECTRIC VEHICLES**
LEISTUNGSSYSTEM ZUM AUFLADEN FÜR ELEKTROFAHRZEUGE
SYSTÈME D'ALIMENTATION ÉLECTRIQUE DE CHARGE DES VÉHICULES ÉLECTRIQUES

(30) Priority: 11.03.2014 NO 20140316
(43) Date of publication of application: 18.01.2017
(73) Proprietor: Zaptec IP AS, 4068 Stavanger (NO)
(72) Inventor: NÆSJE, Kjetil André, 4314 Sandnes (NO); JOHANSEN, Brage W., 4052 Sola (NO); WETTELAND, Øyvind, 4025 Stavanger (NO); SØRENSEN, Per H., 4307 Sandnes (NO)
(74) Representative: Onsagers AS
(86) International application number: PCT/EP2015/054910
(87) International publication number: WO 2015/135911

(56) References cited:
- EP-A1- 2 395 624
- WO-A1-2012/169050
- FR-A1- 2 978 624
- US-A1- 2011 140 512
- US-A1- 2014 062 396

## Description

### Technical field:

The invention relates generally to the field of power supply systems. More specifically, it relates to power supply system which is suitable for converting and/or isolating charging power supplied to a vehicle charging system within battery operated vehicle.

### Background of the invention

Modern electric vehicles or hybrid vehicles are in a larger degree adapted to specific user preferences. The same amount of comfort as provided by traditional combustion engine vehicles are normally expected, such as spacious interior, quick acceleration, long range, air conditioning, heating facilities, electric defrosters, large equipment package, etc.

The combination of all these requirements results in a rapid increase in the consumption of electric power per driven kilometers, which again necessitates a large increase in the battery capacity. Modern lithium based batteries solves many of the challenges set by the requirements. However, in the wake of the battery development other challenges have surfaced.

A battery in a modern electrical vehicle requires large amount of energy prior to be fully charged. The charging period from a normal domestic one-phase power point (for example 230 V / 10 A) is slow, typically 10-35 hours. This reduces the usability of the vehicle since the user must adapt his/her range of use in a larger degree than for combustion engine vehicles, hence giving a reduced comfort level due to felt reduction in range, reliability and predictability.

In order to compensate for the above mentioned disadvantages the energy supply must take place at a higher rate. Many of todays electric vehicles are able to receive power at a considerably higher lever from three-phase based earthing systems compared to power from corresponding one-phase outlets.

According to the publication E/CT 1973, first issue September 1995, Bernard Lacroix and Roland Calvas (see http://www.schneider-electric.com.au/documents/technical-publications/en/shared/electrical-engineering/dependability-availability-safety/low-voltage-minus-1 kv/ect173.pdf), there exist three families of internationally standardized earthing systems worldwide, the TN system, the TT system and the IT system:

### The TN system:

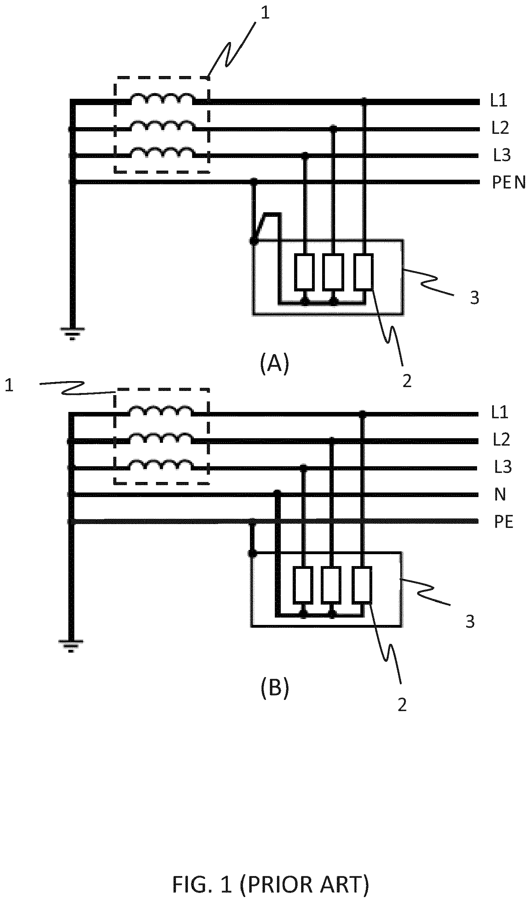

In a TN system the transformer neutral is earthed, and frames of any electrical load are connected to the neutral. Figures 1A and B show prior art diagram of a TN-S and TN-C earthing system, respectively, illustrating inter alia an earthing system transformer 1, electrical loads 2 and a load frame 3. In both configurations the transformer neutral is connected to earth. In the TN-S system both the frames 3 of the electrical load 2 and the load's neutral are connected to a common earth conductor (PEN), while in the TN-C earthing system the frame 3 of the electrical loads 2 and the load neutral is connected to an earth conductor (PE) and a neutral conductor (N), respectively. The phase-to-phase voltage between the power conductors (L1-L3) is typically 400 VAC. Further, the phase-to-neutral voltage between each power conductor (L1-L3) and the neutral conductor (N) is typically 230 VAC, respectively. In case of a fault current in one or more of the three power conductors (L1-L3) the relevant part turns into a short-circuit which may be disconnected by Short-Circuit Protection Devices (SCPD). The TN system is also considered relative fireproof since any earth fault exceeding the rated current causes an immediate disconnection of the defect circuit.

### The TT system:

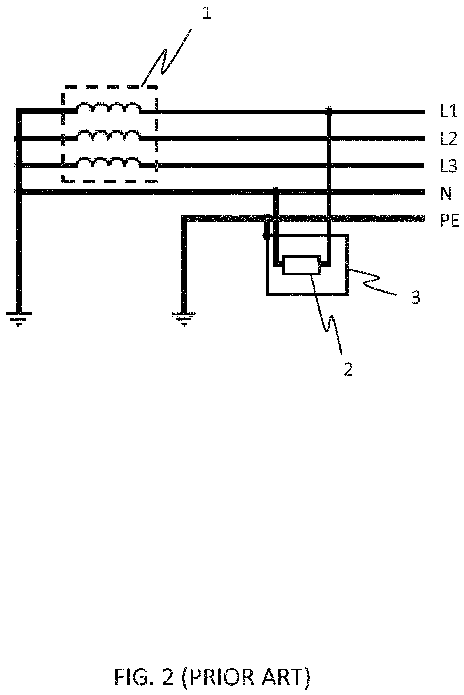

As in a TN system the transformer neutral is in the TT system earthed via a first earth connection and the phase-to-phase voltage is typically 400 VAC. Further, as shown in the prior art diagram of figure 2 frames 3 of any electrical loads 2 are connected to a second earth connection. Any fault current is in this system limited by an impedance (not shown) between the two earth connections, and the faulty part may be disconnected by a Residual Current Device (RCD). As in figure 1, the earthing system transformer 1 is illustrated in figure 2.

### The IT system:

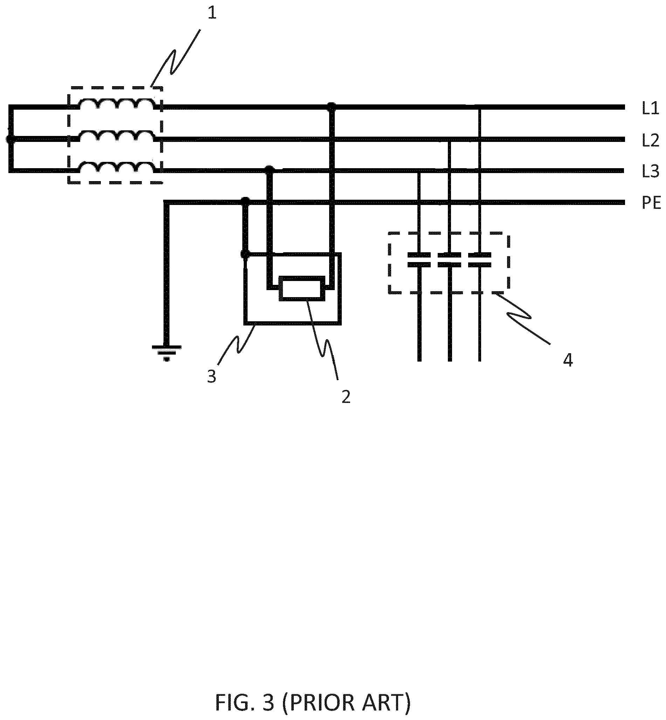

In contrast to both the TN and TT systems the transformer neutral is in an IT system in theory not earthed, but must be provided with a separate ground at each consumer. This is illustrated in the prior art diagram in figure 3 showing an earthing system transformer 1, an electrical load 2 and a load frame 3. In reality the IT system is connected to earth by stray capacities 4 of the network and/or by a high impedance (typically 1'500 Ω). Moreover, the phase-to-phase voltage is typically 230 VAC, i.e. ∼40 % lower than for TN and TT systems. In case of insulation fault within the IT system a small current is developed due to the network's stray capacities 4, which by it self does not present a hazard risk. However, if a second fault occurs, and the first fault has not yet been eliminated, a short-circuit appears and an SCPD must provide the necessary protection.

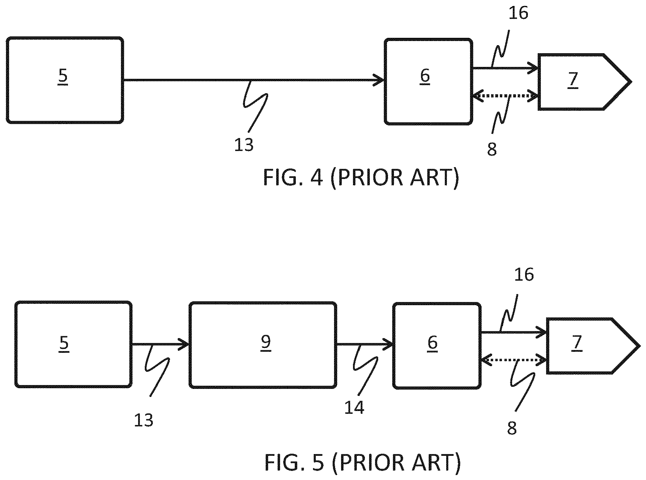

Irrespective of the earthing systems used at the charging site there should always be present an electric vehicle supply equipment (EVSE) unit in order to initiate the power flow over a charging conductor from the power source to the battery to be charged and to perform important communication between the battery containing, chargeable system (e.g. an electric vehicle) and the charging source prior to charging. This is schematically illustrated in figure 5, showing a prior art principle circuit diagram where power is supplied from a power source or distribution cabinet 5 to an EVSE unit 6 with no power conversion. The signal between the EVSE unit 6 and the chargeable system is normally of type pulse-width modulation (PWM) flowing over a dedicated PWM line 8, where the pulse width provides information about the maximum receivable power extractable from the connected power source 5. The chargeable system may also transmit return-signal back to the EVSE unit 6 providing information about the charging status and any faults based on variations within the power extraction across the same PWM line 8. The EVSE unit 6 hence allow an effective exchange of information between the unit 6 and the chargeable system that may prevent overcharge of the local power source 5, while giving the user status and fault reports. In addition, the EVSE unit 6 ensures that its ingoing charging plug 7 is not powered prior to any connection with the chargeable system.

Among the three earthing systems mentioned above the IT earthing system is considered the least suited for three-phase charging due to the following main characteristics:
- Absence of neutral conductor (N)
- Lower phase-to-phase voltage
- Larger variation in earthing quality
- Risk of undetected earth fault

The non-suitability of IT systems may be at least mitigated by the introduction of a transformer enabling transformations from an IT system to a TN or TT system. The voltage may thus be better adapted to the specification of the battery within an electric vehicle (or any other battery powered systems) giving the most efficient charging (for example a phase-to-phase voltage of 400 VAC). In addition, the transformer ensures a power source that is galvanic isolated with a separated earthing connection. Such a power supply system is illustrated in figure 5, showing a prior art principle circuit diagram where power supplied from a power source or distribution cabinet 5 is converted by means of a galvanic isolation transformer 9 prior to being fed into the EVSE unit 6.

A transformer providing a galvanic isolation from the earthing system may even prove useful for users using a fully installed TN and/or TT systems. For example, there have recently been indications of charging problems for certain electric vehicles which are believed to be related to the quality of earthing. A dedicated isolation transformer offers the possibility to add a separate earthing, hence reducing the risk of experiencing earthing related charging problems.

However, the installation of such traditional isolation transformers, in combination with an EVSE unit, is hampered with several undesired effects:
- The total volume and weight of the charging system including the EVSE unit and the transformer increases.
- The noise level is higher.
- The aesthetics of traditional transformers is considered poor.
- The purchase of separate transformers and EVSE units increases total costs.
- The traditional transformers necessitate use of time-lag fuses due to high inductive current flowing within the system.
- The traditional transformers necessitate continuous operation causing an increase in no-load loss.
- The general fire hazard increases with the introduction of additional electric components such as isolation transformers.

An isolation transformer suitable for the above mentioned purpose typically has a weight between 70 and 100 kilograms and a volume between 0,25-0,5 m², necessitating additional personal and/or equipment during installations. The increased noise level may be at least mitigated by providing dedicated foundations, but this will cause an increase in cost and perhaps give an even poorer aesthetics. The latter disadvantage will be more pronounced if there exist any galvanized tinplate claddings with cooling air clearances. For these reasons it is often desirable to find or create an installation site that to a large degree hides the transformer, hence giving a challenge that contributes further to the total cost.

The use of time-lag fuses during activation of the transformer in order to compensate for the high inductive current flowing within the system gives a reduced protection at error conditions since this type of fuse is slower and requires more power to trigger. An additional soft start system or a zero crossing striking system may mitigate the disadvantage of time-lag fuses. However, this causes a further increase in complexity and cost.

Another problem with traditional transformers is that fact that they are normally in continuous operation. There will hence be a no-load loss which may vary depending on the specific configuration of the transformer. As an example, a typical no-load loss from a 15 kVA transformer is between 100 and 250 W. Such no-load losses may be somewhat reduced by investing in a more elaborate transformer providing operations with less eddy current losses and resistant losses, but at the expense of higher cost. In addition to the no-load losses there will be losses during charging, primarily due to copper losses, but also from eddy current losses and magneto-acoustic losses. Normally theses charging losses constitute 2-5 % of transformed power in a traditional transformer.

Any investments in EVSE units and subsequent installations costs must be added to the investment, transport, adjustment and installation costs of a suitable transformer. US2014062396 discloses a power supply system for isolating charging power prior to being supplied to a vehicle charging system, comprising an isolation transformer according to the prior art. It is therefore an object of the present invention to provide a cost and energy effective power supply system for charging a battery within a chargeable system, allowing a high earthing quality at the charging site. Another object of the present invention is to provide a power supply system that mitigates at least some of the disadvantageous mentioned above for the installation of traditional isolation transformers.

### Summary of the invention

The above-identified objects are achieved by a power supply system in accordance with claim 1. The invention also concerns a computer program product in accordance with claim 15. Further beneficial features are defined in the remaining dependent claims.

In particular, the invention concerns a power supply system suitable for converting and/or isolating charging power supplied to a vehicle charging system within battery operated vehicle. The system comprises an isolation transformer allowing at least one of electric isolation and voltage conversion between a primary power source and the vehicle charging system. The primary power source may be a power distribution system such as an TN earthing system, a TT earthing system or an IT earthing system. The transformer comprises a primary side wherein one or more terminals of the primary side are electrically connectable to the primary power source and a secondary side, wherein one or more terminals of the secondary side are electrically connectable to the vehicle charging system, an EVSE control device electrically connectable to the vehicle charging system, a data communication line connected to the EVSE control device and connectable to the vehicle charging system, which data communication line allows, when connected to the vehicle charging system, transmission of control signals to the vehicle charging system, monitoring coupling between secondary side and the vehicle charging system and monitoring at least one parameter related to the charging status of the vehicle charging system during charging. The power supply system is further characterized in that the isolation transformer is a solid state transformer and further that the isolation transformer and the EVSE control device constitutes an integrated unit, i.e. physically arranged in common unit.

In a preferred embodiment the EVSE control device is configured to activate power flow into at least one of the one or more terminals of the solid state transformers primary side when detecting a coupling between the corresponding power receiving terminal of the transformers secondary side, enabling initiation of charging of the vehicle charging system. The activation may be performed by one or more power relays within a switching system connected on the primary side.

In another preferred embodiment the solid state transformer is a three-phase solid state transformer configured to allow one or more of the following power conversions:
- converting a single-phase alternating voltage (AC) to a galvanic isolated three-phase alternating voltage (AC),
- converting a three-phase alternating voltage (AC) to a galvanic isolated single-phase alternating voltage (AC),
- converting a three-phase alternating voltage (AC) to a galvanic isolated three-phase alternating voltage (AC),
- converting a three-phase alternating voltage (AC) to a direct current voltage (DC) and
- converting a single-phase alternating voltage (AC) to a direct current voltage (DC).

In another preferred embodiment the solid state transformer is configured to enable two or more of the power conversions, and further that the solid state transformer comprises a switching system enabling user controlled switching between the different power conversions.

In another preferred embodiment the solid state transformer is configured to enable three-phase transformation of a first alternating phase-to-phase voltage (Vₚ) from a three-phase primary power source to a second alternating phase-to-phase voltage (Vₛ), wherein the second alternating phase-to-phase voltage (Vₛ) is set in accordance with the three-phase alternating power required for charging one or more batteries within the vehicle charging system. The first and second alternating phase-to-phase voltages (Vₚ,Vₛ) may be equal or different. For example, Vₚ may be 230 VAC and Vₛ may be 400 VAC. The primary power source may for example be a power distribution system of type IT earthing system.

In another preferred embodiment the EVSE control device comprises monitoring means configured to monitor physical parameters descriptive of the performance of the power supply system. The physical parameters may comprise at least one of temperature within the solid state transformer, ambient temperature within the integrated unit, air humidity, primary voltage (Vₚ) supplied to the primary side of the solid state transformer, secondary voltage (Vₛ) supplied from the secondary side of the solid state transformer, earth fault caused by fault in the connected primary power source (5) during charging, power flow between electric components within the integrated unit (100) and maximum power receivable by the vehicle charging system electrically connected to the secondary side (9b) of the solid state transformer (9). Furthermore, the EVSE control device may comprise monitoring means configured to monitor one or more of the phase voltages supplied by a connected power distribution system such as TN earthing system, TT earthing system or IT earthing system and one or more of the phase currents supplied by the power distribution system. Also, the EVSE control device may comprise first transmission means (20) allowing access and transmission of the physical parameters to computer networks such as intranet, extranet and/or internet.

In another preferred embodiment the primary power source is a power distribution system distributing three-phase power to the integrated unit, and that the power supply system further comprises a third communication line connectable between the EVSE control device and the power distribution system, which third communication line allows measurements of at least one of input voltage and input current at an entry point of the power distribution system (switchboard / fuse box) and data transmission to the EVSE control device (6).

In another preferred embodiment the power supply system further comprises at least one power cable configured to transfer power from the primary power source to the integrated unit, wherein each of the at least one power cable comprises at least one power line for transfer of power, and at least one data communication line for transfer of control signals.

In another preferred embodiment the power supply system further comprises at least one power cable configured to transfer power from the integrated unit to the vehicle charging system, wherein each of the at least one power cable comprises at least one power line for transfer of power, and at least one data communication line (19) for transfer of control signals.

The control signals may be of type power width modulated (PWM) signals. Furthermore, the data communication lines enabling transfer of control signals from the primary power source to the vehicle charging system may be configured to bypass the solid state transformer.

The invention also concerns a computer program product stored in the memory of a control unit comprising computer-readable instructions which, when loaded and executed on the control unit, monitor physical parameters descriptive of the performance of the power supply system in accordance with any of the features mentioned above..

In the following description, numerous specific details are introduced to provide a thorough understanding of embodiments of the claimed apparatus and method. One skilled in the relevant art, however, will recognize that these embodiments can be practiced without one or more of the specific details, or with other components, systems, etc. In other instances, well-known structures or operations are not shown, or are not described in detail, to avoid obscuring aspects of the disclosed embodiments.

### Brief description of the drawings

Figures 1A and B show circuit diagrams of a TN-S and TN-C earthing system, respectively, in accordance with prior art,
Figure 2 shows a circuit diagram of a TT earthing system in accordance with prior art,
Figure 3 shows a circuit diagram of an IT earthing system in accordance with prior art,
Figure 4 shows a principle circuit diagram where electric power is supplied with no conversion to an electric vehicle charging plug in accordance with the prior art,
Figure 5 shows a principle circuit diagram where electric power is supplied with conversion to an electric vehicle charging plug in accordance with the prior art,
Figure 6 shows a principle drawing of the power distribution system in accordance with the invention,
Figures 7A and 7B shows a principle circuit diagram and a more detailed circuit diagram, respectively, where electric power is supplied with conversion to an electric vehicle charging plug in accordance with a first embodiment of the invention,
Figure 8 shows a principle circuit diagram where electric power is supplied with conversion and/or isolation to an electric vehicle charging plug in accordance with a second embodiment of the invention,
Figure 9 shows a principle circuit diagram where electric power is supplied with conversion and/or isolation to an electric vehicle charging plug in accordance with a third embodiment of the invention,
Figure 10 shows a principle circuit diagram where electric power is supplied with conversion and/or isolation to an electric vehicle charging plug in accordance with a fourth embodiment of the invention.
Figure 11 shows a principle circuit diagram where electric power is supplied with conversion and/or isolation to an electric vehicle charging plug in accordance with a fifth embodiment of the invention,
Figure 12 shows a principle circuit diagram where three-phase electric power is supplied into a three phase solid state power converter for electric conversion and isolation from an IT earthing system to a TN earthing system in accordance with the invention,
Figure 13 shows a detailed circuit diagram where three phase electric power is supplied into a three phase solid state power converter for electric isolation or conversion prior to charging of an electric vehicle,
Figure 14A and 14B show principal circuit diagrams where electric power is supplied with conversion and/or isolation to an electric,
Figure 15 shows a principle circuit diagram where electric power is supplied with conversion and/or isolation to an electric vehicle,
Figure 16 shows a principle circuit diagram where electric power is supplied with conversion and/or isolation to an electric vehicle and
Figure 17 shows a principle circuit diagram where electric power is supplied with AC/DC conversion to an electric vehicle.

### Detailed description of the drawings

A typical private estate in Norway has approximately 25 kW of electric power available from the electric supply mains. Typically 3 kW is distributed into the garage, providing a normal charging time of approximately 30 hours for charging an electric vehicle such as a Tesla, or 10 hours for most other electric cars such as Renault, Volkswagen and Nissan Leaf.

With the innovative system charging time may be boosted considerably while maintaining stable power for domestic use. With the innovative system the electric vehicle may be charged with an elevated power, for example 11 kW which will enable a three times faster charging.

The innovative system fits nicely into any garage having a decorative design inspired by space technology developed by the Norwegian company Zaptec and smart power systems.

The innovative system renders remote monitoring and control possible from any smartphone, pad, or computer system. Further, the system may automatically adapt its charging speed according to the current power use in the estate through so-called adaptive charging. It ensures that the risk of a blackout due to exceeded power usage is eliminated or reduced, and that the charging of the electric vehicle occurs at the fastest possible rate.

The innovative system is adapted for Smart Grid, meaning that it may communicate with utility companies such as the local power company. This option is considered important in order to provide further opportunities in the future for optimal economic charging. For example, it would allow programming the innovative system to charge the electric vehicle when electricity prices are cheapest, normally during nighttime. This will ensure both lower costs and optimization of efficiency.

The innovative system also includes a safety system that ensures an increased safety in the estate, in addition of maintaining high quality and control of the available electric power.

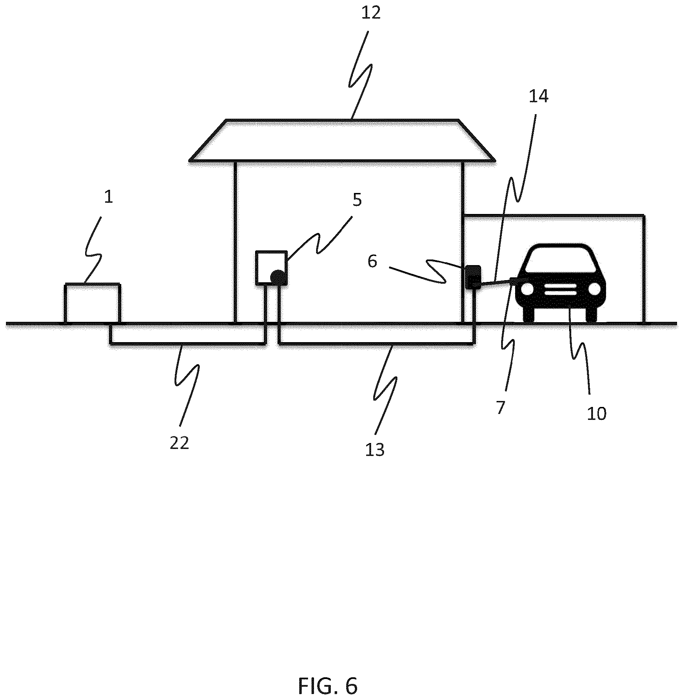

Figures 1-3 are described above in connection with relevant background techniques of the invention. Figures 4 and 5 shows prior art solutions for providing power from a power supply or power distribution system 5, via a box containing electric vehicle supply equipment (EVSE) 6, to an electric vehicle (EV) plug 7. The electric power is supplied over charging supply mains 13,14,16. The electrical connections 8,16 between the EVSE box 6 and the EV plug 7 may be configured such that they both supply necessary electrical power (over a power connector 16) and perform certain signal communication between the EV plug 7 and the EVSE 6. This signal communication may be accomplished by transmitting pulse width modulation (PWM) signals over a PWM line 8, where the pulse width carries e.g. information about the maximum power obtainable from the available power distribution system 5. By monitoring variations in power load over the PWM line 8 the EV-plug 7 connected vehicle 10 (figure 6) may also transmit information such as current charging status and electric faults. In figure 5 power conversion is performed by means of a suitable transformer 9. Such a transformer 9 may e.g. be necessary if the power distribution system 5 supplies power with a different voltage than required by the charging system within the electrical vehicle 10.

The main motivation of this invention is to provide a system for converting and/or isolating alternating power during charging of a battery operated vehicle in order to save weight, space, mounting time, energy, esthetics and costs. This is achieved by i.a. combining a solid state transformer (SST) and EVSE functionality into one unit. This unit is capable of for example performing voltage conversion between IT-grid and TN-grid (230 VAC/ 400 VAC), providing galvanic isolation between the electric vehicle and the grid / power distribution system (where this is necessary and/or mandatory and/or advisable) and enabling use of mobile charging adapters with the same functionality as described above.

An overview of a typical installation of the inventive power supply system is illustrated in figure 6 showing the power flow from a transformer 1 by a utility company, providing electric power to e.g. a household 12 (or any other electric power requiring buildings). The incoming electric power is supplied over electric supply mains 22 to a power distributing system or panel 5. Some of the available power is further distributed over charging supply mains 13,14 for providing necessary power to the EV plug 7 / vehicle 10 via the EVSE box 6.

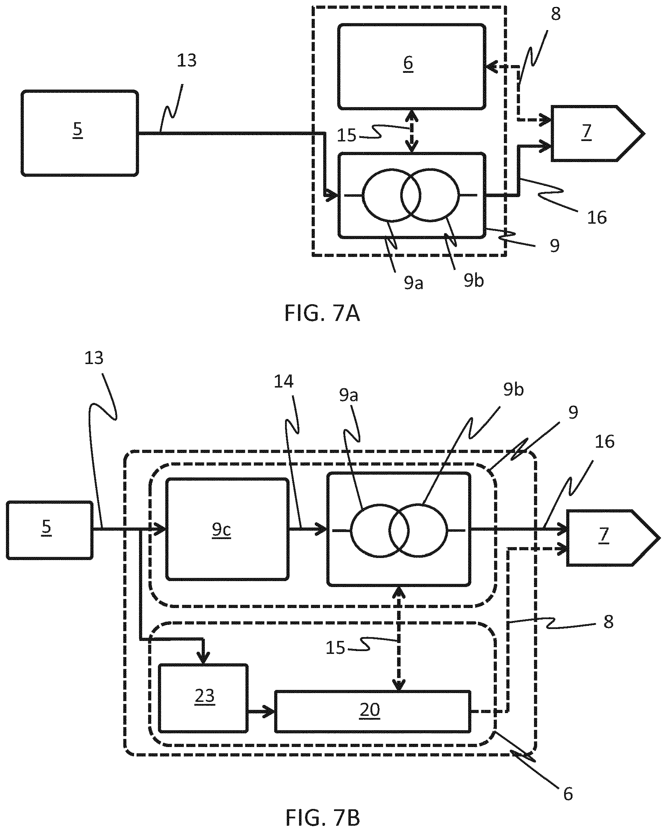

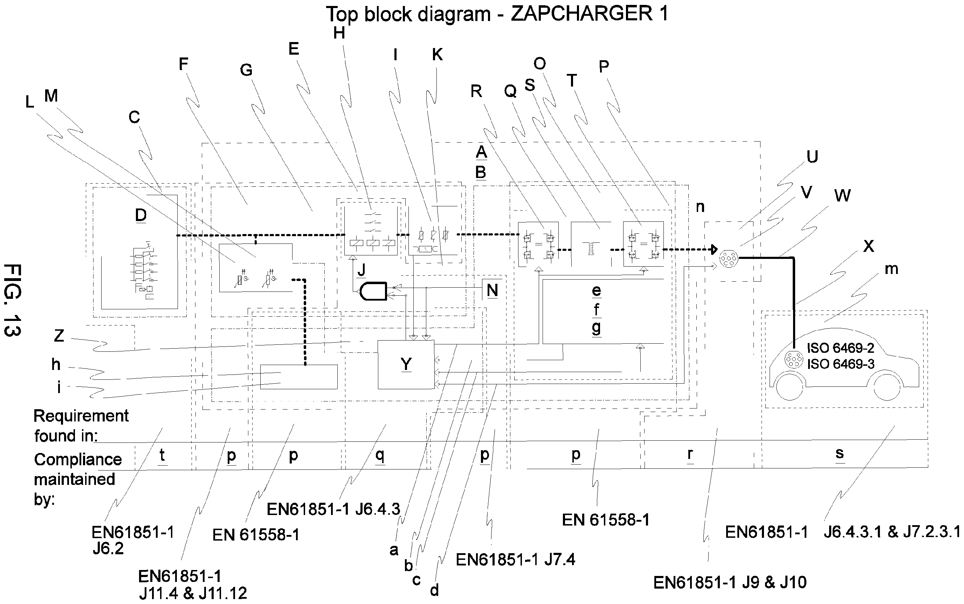

Figures 7-10 show principal circuit diagrams of the conversion and/or isolation system in accordance with some of the embodiments of the invention. More specifically, figure 7A shows the principal configuration of a first embodiment of the invention in which the power distribution system 5 is supplying non-converted power over first charging supply mains 13. A solid state transformer (SST) 9 or any other isolating transformers are converting a primary voltage (Vₚ), supplied to the primary side 9a of the transformer 9 by the power distribution system 5, to a secondary voltage (Vₛ) supplied from the secondary side 9b of the transformer 9. The power formed by the secondary voltage (Vₛ) is then transferred to the EV plug 7. An EVSE unit 6 is coupled to the EV-plug 7 for allowing data communication there between over a first data communication line 8. The system is preferably configured to also enable data communication between the EVSE unit 6 and the transformer 9 over a second communication line 15. The dashed lines around the EVSE unit 6 and the transformer 9 indicate that these two units 6,9 are built into a common box, i.e. as an integrated unit 100. This solution saves i.a. assembly work, costs and space. It may also improve the aesthetics of the system (depending on the design). Figure 7B shows further details of the first embodiment system in figure 7A. The transformer 9 is shown to include a transformer module 9c including components for managing the electric power supplied to the primary side 9a, for example contactor(s), main fuse(s), EMC filter(s), etc. Furthermore, the EVSE unit 6 is shown to include i.a. a power supply 23 (for example 5V/12V) for providing power to an EVSE module 20 having a set of components providing desired control of the transformer 9 and/or the electric vehicle 10 (via the EV plug 7). These components may for example be a micro controller unit and PWM logics (figure 13). Again, the outermost dashed lines indicate that the EVSE unit 6 and the transformer 9 should preferably constitute an integrated unit 100. The EVSE module 20 may also be configured to enable monitoring of parameters such as temperature within the transformer 9, monitoring of primary voltage (Vₚ), phase voltages, phase currents, any earth faults and other system temperatures such as on each phase of a three phase transformer, ambient temperatures, air humidity, etc. The two latter parameters may be important since charging should normally not be performed if the ambient temperature and/or the air humidity are/is too high.

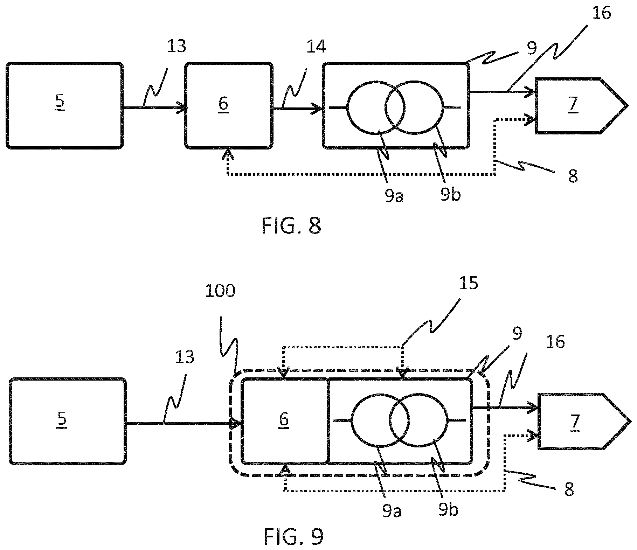

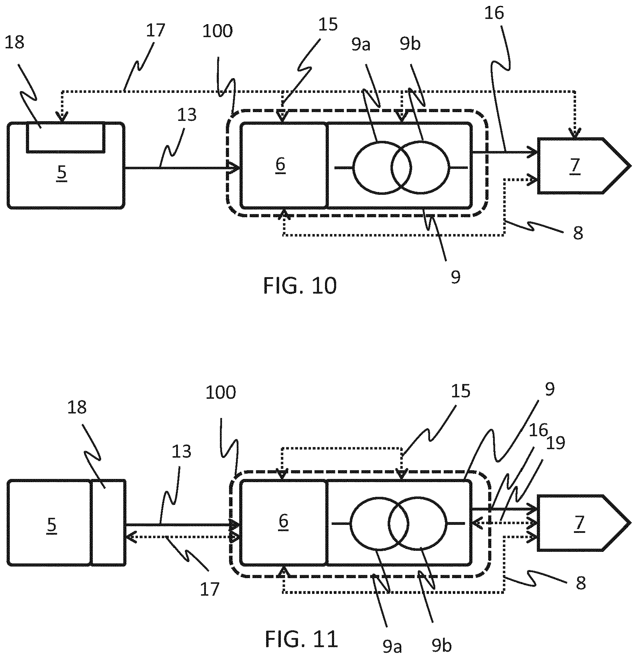

Figures 8 and 9 show a second and third embodiment of the invention, respectively, where the electric power, being supplied from the power distribution system 5 over the first charging supply mains 13, is guided through the EVSE unit 6 prior to entering the primary side 9a of the transformer 9. The EVSE unit 6 is thus provided with grid voltage without prior conversion at the site of installation, and may detect any connection of a load corresponding to an electric vehicle, and hence a request to start charging. When such a request is registered (by means of the data communication line 8) the transformer 9 is activated in order to initiate charging with required conversion of voltage and/or providing necessary isolation with separate earthing. As a result the transformer 9 is activated only when the system is arranged for charging of the electric vehicle 10. The transformer 9 will thus have little or no no-load losses, saving a significant amount of energy and operational expenditures. The difference between the second embodiment shown in figure 8 and the third embodiment shown in figure 9 is i.a. that the EVSE unit 6 and the transformer 9 are integrated into a common unit 100, as for the first embodiment (figure 7). Hence, the potential saving of operational expenditures will in this case be on top of the manufacturing savings achieved by manufacturing the EVSE unit 6 and the transformer 9 as one integrated unit 100. Figure 9 also shows a second data communication line 15 between the transformer 9 and the EVSE unit 6 allowing the two units 6,9 to exchange data. Note that the data flow may be an one-way data flow or a two-ways data flow.
For all the above mentioned configurations the particular chose of transformer should be a solid state transformer, for example a solid state transformer of the type disclosed in the publication 978-1-4244-2893-9/09 2009 IEEE p. 3039-3 044. In this connection particular reference is made to figure 1 in the publication and its related text. Such a solid state transformer has the potential of providing more space and/or save costs. Furthermore, it may facilitate more control of available data. As an example, figures 10 and 11 show a fourth and fifth embodiment of the invention, respectively, where monitoring / control of data takes place over at third communication line 17 connected to relevant components 18 of the power distribution system 5, for example by current and/or voltage measurements of incoming power (I&U) to the building 12 or the power distributing panel 5 in question. These data may be applied to regulate the maximum charging current an electric vehicle 10 may receive based on the available power. In this way the vehicle may draw maximum power for charging without risking that the main fuse of the building 12 / power distribution panel 5 trips (. the vehicle 10 must adapt). It is also possible to log data, perform upgrades or perform debugging of the above configurations over for example internet. This may be achieved by connecting suitable transformer and internet connections, optionally over future AMS systems (systems for automatic power consumption measurements). Figure 10 shows an example where the data communication between the different modules 5,6,7,9 takes place over separate data communication lines 8, 15, 17, while figure 11 shows an example where the data communication 17 between the relevant components 18 of the power distribution system 5 and the EVSE unit 6, and the data communication 19 between the transformer 9 and the EV plug 7 takes place by use of power line communication 17,19, i.e. by monitoring pulse modulation width (PWM) signals. For example, the pulse width informs the vehicle 10 about the maximum power that may be drawn from the connected power distribution system 5. The vehicle 10 may then send signals back to the EVSE unit 6 informing it about charging status and any faults by means of variations in the power drawn over the same PWM line 8,19. In addition, the communication over the PWM line 8,17,19 may ensure that the charge flow is not activated prior to proper connection with the electric vehicle 10.

Data information may be easily transmitted between the different units / modules 5,6,7,9 by use of digital and/or analog networks/signals.

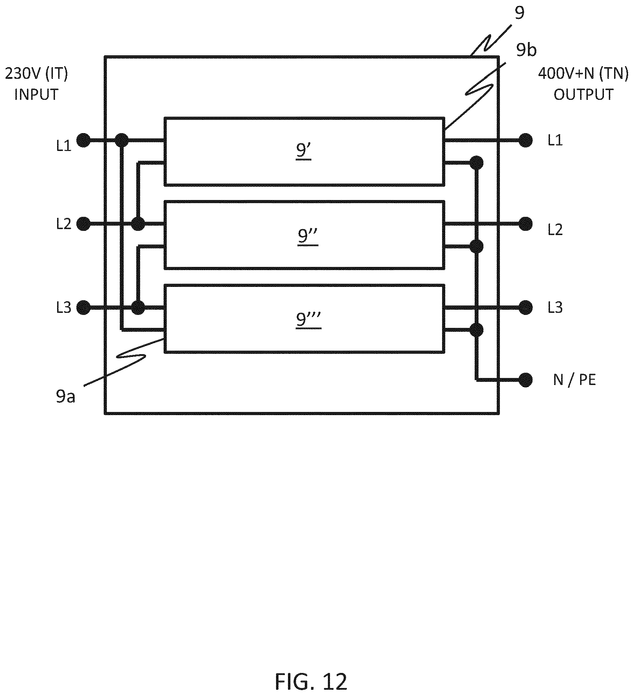

Figure 12 shows the specific electric connections when the above mentioned conversion and isolation system is used for converting an IT earthing system to a TN earthing system. As clearly seen, 230 VAC phase-to-phase voltages are converted by use of a three-phase transformer 9 to earthed (PE) 400 VAC phase-to-phase voltages. A three-phase transformer 9 comprises three power modules 9',9",9"', each having a primary side 9a with primary windings and terminals, and a secondary side 9b with secondary windings and terminals. One of the two terminals of each phase at the secondary side 9b is connected to either a common neutral (N) and earth (PE) line, as the case is for a TN-S earthing system (figure 1A) or to a separate neutral (N) line, as the case is for a TN-C earthing system (figure 1B).

Note that even if references have been made to an electric vehicle throughout the description the conversion and/or isolation system is equally applicable to other batteries or capacitors containing apparatus requiring regular charging.

A detailed circuit diagram is shown in figure 13 where the IT to TN conversion is illustrated as an example only. Extensive reference is made to standards relevant in the field of electric vehicle conductive charging system (International standards (ISO) / European standards (EN)) that contributes to facilitate implementation of the invention by the skilled person.

The invention related to the general inventive concept of integrating the EVSE unit 6 and the transformer / SST 9 in the same unit 100 has been described above. Such a unit 100 may be a mobile unit 100. However, it will always be electrically connected to the grid / power distribution system 5 when in use.

In the following an alternative of the invention will be described where the transformer or SST 9 is built into an adapter that should be connected to an existing EVSE unit 6 by the user. It is highly preferable that such an adapter have galvanic isolation. Furthermore, the adapter may as an option allow conversion between two different voltages and/or different types of currents/voltages, i.e. one or more of
- single phase AC-to-single phase AC,
- single phase AC-to-DC,
- three-phase AC-to-single phase AC,
- three-phase AC-to-three phase AC and
- three phase AC-to-DC.

In case of DC the limiting DC power would be the available power from the EVSE unit 6.

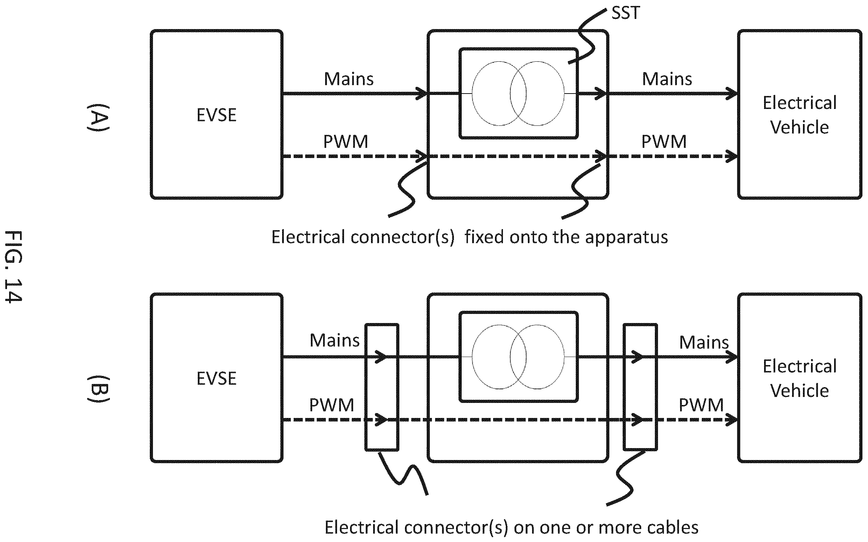

Figure 14A and 14B show examples of connecting an adapter with a transformer 9 of type SST between the EVSE unit 6 and the EV plug 7, the latter being connected to the charging system within the electric vehicle 10. As before the transformer 9 comprises a primary side 9a connected to the supply mains 14 from the EVSE-unit 6 and a secondary side 9b connected to the supply mains 16 to the EV plug 7. Data communication between at least the EVSE unit 6 and the electrical vehicle 10 is ensured by use of a PWM line 8 going through the transformer containing adapter. Furthermore, the adapter in figure 14A contains electrical connector(s) (female / male) fixed to its outer walls, faced towards the EVSE-unit 6 and the electric vehicle 10, respectively. In contrast, figure 14B shows an example where the electrical connector(s) (female / male) is/are arranged on cables situated a distance from the outer walls.

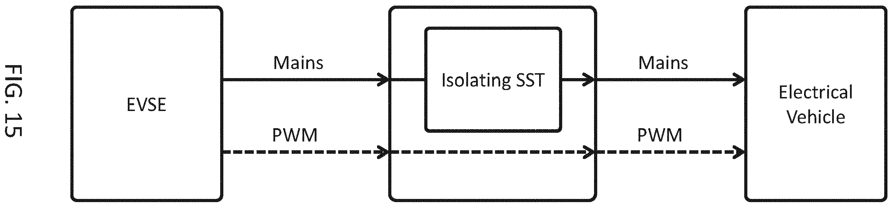

Figure 15 shows an example of a system where the electrically isolating SST is placed after the EVSE and performs a 1:1 voltage conversion for one or more phases. The objective of this particular configuration is to achieve galvanic separation between the electric vehicle and the remaining electrical system (supply/grid) in order to ensure that the vehicle will "take charge" even with insufficient grounding. The device may be designed and sold as an adapter (which can be brought along and stored inside the electric vehicle between uses). The primary side in the SST is electrically connected to a power supplying connector and its secondary side is electrically connected to a power plug. At least one pin in the power supplying connector and at least one pin in the power plug should be in electrical and/or signaling connection with each other so that at least one control signal (such as a PWM-signal) can be transferred between the connected equipment on the power supplying connector (primary side) and the connected equipment on the power plug (secondary side).

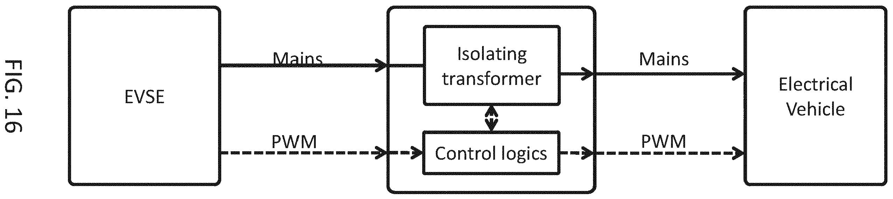

Figure 16 shows an example of a system where the configuration is similar to the configuration in figure 15. However, this particular configuration is in addition equipped with an internal control/logics unit that is able to monitor and/or influence (override) the PWM-signalling process if necessary. Such monitoring and/or overriding is in accordance with charging system IEC-TS 62763. During particularly hot days, and/or if ventilation filters, channels or fans are covered or partly clogged, the SST can become too hot and may request a controlled shutdown of the charging process (by altering the PWM signalling level according to the standard). It can also signal that a lower allowed current level should be drawn by the EV (lower than the current level allowed by the EVSE). It is an advantage if charging can take place even if a fault and/or overheating situation arises, even at levels lower than what the EVSE normally is adjusted to deliver. This is done either by reading the input PWM and provide a lower (smaller) PWM-signal (telling the EV to reduce current withdrawal according to the new PWM width), or by altering the current that goes in the PWM-loop (uses the temperature fault, ventilation fault and/or disconnect signalling protocols in accordance with IEC-TS62763). An important security measure is to ensure that the outgoing PWM signal (to the electric vehicle) is not indicating a current higher than the original EVSE's PWM-signal.

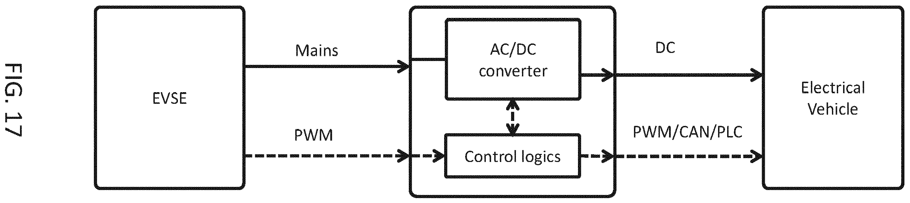

Figure 17 shows an example of a system where a converter is electrically placed between the EVSE and the electric vehicle (as earlier described), but now with an electronic AC/DC-converter in addition to logic circuits that is able to read the input PWM coding and output a corresponding (and possibly (down)adjusted) PWM coding and/or PLC, CAN-bus or similar bus coding to be communicated to the electric vehicle (for current level adaption to/from different signalling systems - and for (down)adjustments during faults as described earlier). By using the above described system it will be possible to use the DC-charging input (for example ChaDeMo) for semifast charging of an electric vehicle that would normally not accept such high charging power from the available AC charger By use of this method 3-6 times the power could be available for charging.

In the preceding description, various aspects of the system according to the invention have been described with reference to the illustrative embodiment. For purposes of explanation, specific numbers, systems and configurations are set forth in order to provide a thorough understanding of the apparatus and its workings. However, this description is not intended to be construed in a limiting sense. Various modifications and variations of the illustrative embodiment, as well as other embodiments of the apparatus, which are apparent to persons skilled in the art to which the disclosed subject matter pertains, are deemed to lie within the scope of the present invention.

### CORRESPONDING TEXT TO REFERENCE NUMERALS IN FIG. 13:

A) EVSE with IT to TN conversion
B) IEC 60664-1 (Insulation coordination)
   EN 61558-1 (powertransformers & power supply)
C) Wiring cabinet
D) 32A or 40A (depend on wiring)
   Overcurrent limit
   With integral or separate RCD
   RCD type A acc to
   IEC 61008-1 or
   IEC 61009-1 or
   IEC 60755
E) Input Board
F) EN 60664-1
   EN 61000-6-1
   EN 61000-6-3
G) 230VAC 3phase in (delta)
H) Mains relays
I) Overvoltage protection
J) Main power enable
K) Input board temp. sensor for Relays, varitors, power connector
L) EN 50065-1 (PLC)
M) AC conditioning for PLC & 12V power supply
N) EVSE RCD
O) Modules on main board
P) EN 61558-2-16 (ext. of 61558-1)
Q) Transformer module (x3), one for each phase
R) Primary driver
S) IT/TN transformer
T) Secondary driver
U) Charger plug
V) EN 62196-1 & -2
W) Charging cable with connector according to EN 62196-1, -2 to fit type 2 socket outlet EVSE end
X) Charging cable with connector according to EN 62196-1, -2 to fit type 1 or type 2 vehicle connector
Y) Zapcharger MCJ
Z) Powerline communication
a) Driver enable (x3) (Hardwired)
b) Switching pulses (x3)
c) Serial communication (x3)
d) Datakomm. + 12V power
e) Power module MCU
   - convert switching signals
f) Monitors
   - input and output voltage
      - input and output voltage
      - temperature of trafo and drivers
g) Shall stop switching when following is exceeded
   - Max current
   - Max temperature
   - Max voltage
h) 230VAC/12VDC Power supply
i) EN 61558-2-16
m) DUC (Device under charge)
n) 400VAC 3phase + N 8star)
p) Design
q) Design & software
r) Component selection & software
s) Requirement in user manual or marking
t) Requirement in inst. manual

## Claims

1. A power supply system for isolating charging power prior to being supplied to a vehicle charging system within battery operated vehicle (10), which system comprises
- an isolation transformer (9) allowing
electric isolation
between a primary power source (5) and the vehicle charging system, which transformer (9) comprises
∘ a primary side (9a), wherein one or more terminals of the primary side (9a) are electrically connectable to the primary power source (5) and
∘ a secondary side (9b), wherein one or more terminals of the secondary side (9b) are electrically connectable to the vehicle charging system,
- an EVSE control device (6) electrically connectable to the vehicle charging system,
- a data communication line (8) connected to the EVSE control device (6) and connectable to the vehicle charging system, which data communication line (8) allows, when connected to the vehicle charging system,
∘ transmission of control signals to the vehicle charging system,
∘ monitoring coupling between secondary side (9b) and the vehicle charging system and
∘ monitoring at least one parameter related to the charging status of the vehicle charging system during charging,
**characterized in that**
the isolation transformer (9) is an AC-to-AC solid state transformer (9) and further that the isolation transformer (9) and the EVSE control device (6) constitutes an integrated mobile unit (100),
the AC-to-AC solid state transformer (9) being a three-phase solid state transformer (9) configured to allow one or more of the following power conversions:
- converting a single-phase alternating voltage (AC) to a galvanic isolated three-phase alternating voltage (AC),
- converting a three-phase alternating voltage (AC) to a galvanic isolated single-phase alternating voltage (AC) and
- converting a three-phase alternating voltage (AC) to a galvanic isolated three-phase alternating voltage (AC).

2. The power supply system according to claim 1, **characterized in that** the EVSE control device (6) is configured to activate power flow into at least one of the one or more terminals of the solid state transformers (9) primary side (9b) when detecting a coupling between the corresponding power receiving terminal of the transformers (9) secondary side (9b), enabling initiation of charging of the vehicle charging system.

3. The power supply system according to claim 1 or 2, **characterized in that** the solid state transformer (9) is configured to enable two or more of the power conversions, and further that the solid state transformer (9) comprises a switching system (9c) enabling user controlled switching between the different power conversions.

4. The power supply system according to any one of the preceding claims, **characterized in that** the solid state transformer (9) is configured to enable three-phase transformation of a first alternating phase-to-phase voltage (Vₚ) from a three-phase primary power source (5) to a second alternating phase-to-phase voltage (Vₛ), wherein the second alternating phase-to-phase voltage (Vₛ) is set in accordance with the three-phase alternating power required for charging one or more batteries within the vehicle charging system..

5. The power supply system according to claim 4, **characterized in that** the three-phase primary power source (5) is a power distribution system of type IT earthing system (5).

6. The power supply system according to any one of the preceding claims, **characterized in that** the EVSE control device (6) comprises monitoring means (20) configured to monitor physical parameters descriptive of the performance of the power supply system.

7. The power supply system according to claim 6, **characterized in that** the physical parameters comprises at least one of
- temperature within the solid state transformer (9)
- ambient temperature within the integrated unit (100),
- air humidity,
- primary voltage (Vₚ) supplied to the primary side (9a) of the solid state transformer (9),
- secondary voltage (Vₛ) supplied from the secondary side (9b) of the solid state transformer (9),
- earth fault caused by fault in the connected primary power source (5) during charging,
- power flow between electric components within the integrated unit (100) and
- maximum power receivable by the vehicle charging system electrically connected to the secondary side (9b) of the solid state transformer (9).

8. The power supply system according to claim 6 or 7, **characterized in that** the EVSE control device (6) further comprises first transmission means (20) allowing access and transmission of the physical parameters to computer networks.

9. The power supply system according to any one of the preceding claims, **characterized in that**
the primary power source (5) is a power distribution system (5) distributing three-phase power to the integrated unit (100), and that
the power supply system further comprises
- a third communication line (17) connectable between the EVSE control device (6) and the power distribution system (5), which third communication line (17) allows measurements of at least one of input voltage and input current at an entry point (18) of the power distribution system (5) and data transmission to the EVSE control device (6).

10. The power supply system according to any one of the preceding claims, **characterized in that** the power supply system further comprises at least one power cable (13) configured to transfer power from the primary power source (5) to the integrated unit (100), wherein each of the at least one power cable (13) comprises at least one power line for transfer of power, and at least one data communication line (17) for transfer of control signals.

11. The power supply system according to any one of the preceding claims, **characterized in that** the power supply system further comprises at least one power cable (16) configured to transfer power from the integrated unit (100) to the vehicle charging system, wherein each of the at least one power cable (16) comprises at least one power line for transfer of power, and at least one data communication line (19) for transfer of control signals.

12. The power supply system according to claim 10 or 11, **characterized in that** the control signals are of type power width modulated (PWM) signals.

13. The power supply system according to any one of claims 10-12, **characterized in that** the data communication lines (17,19) enabling transfer of control signals from the primary power source (5) to the vehicle charging system are configured to bypass the solid state transformer (9).

14. A computer program product stored in the memory of a control unit comprising computer-readable instructions which, when loaded and executed on the control unit, monitor physical parameters descriptive of the performance of the power supply system in accordance with any one of claims 1-13.

## Patentansprüche

1. Stromversorgungssystem zum Isolieren von Ladestrom, bevor dieser einem Fahrzeugladesystem in einem batteriebetriebenen Fahrzeug (10) zugeführt wird, wobei das System umfasst:
- einen Trenntransformator (9), der eine elektrische Isolierung zwischen einer Primärstromquelle (5) und dem Fahrzeugladesystem erlaubt, wobei der Transformator (9) umfasst
o eine Primärseite (9a), wobei ein oder mehrere Anschlüsse der Primärseite (9a) elektrisch mit der Primärstromquelle (5) verbindbar sind, und
o eine Sekundärseite (9b), wobei ein oder mehrere Anschlüsse der Sekundärseite (9b) elektrisch mit dem Fahrzeugladesystem verbindbar sind,
- ein EVSE-Steuergerät (6), das elektrisch mit dem Fahrzeugladesystem verbindbar ist,
- eine Datenkommunikationsleitung (8), die mit dem EVSE-Steuergerät (6) verbunden und mit dem Fahrzeugladesystem verbindbar ist, wobei die Datenkommunikationsleitung (8), wenn sie mit dem Fahrzeugladesystem verbunden ist, Folgendes erlaubt:
o Übertragung von Steuersignalen an das Fahrzeugladesystem,
o Überwachung der Kopplung zwischen Sekundärseite (9b) und Fahrzeugladesystem und
o Überwachung wenigstens eines auf den Ladezustand des Fahrzeugladesystems bezogenen Parameters während des Ladens,
**dadurch gekennzeichnet, dass**
der Trenntransformator (9) ein AC/AC-Festkörpertransformator (9) ist und der Trenntransformator (9) und das EVSE-Steuergerät (6) ferner eine integrierte mobile Einheit (100) bilden,
der AC/AC-Festkörpertransformator (9) ein dreiphasiger Festkörpertransformator (9) ist, der dazu eingerichtet ist, wenigstens eine oder mehrere der folgenden Stromumwandlungen zu erlauben:
- Umwandlung von Einphasen-Wechselstrom (AC) in galvanischen, isolierten Dreiphasen-Wechselstrom (AC),
- Umwandlung von Dreiphasen-Wechselstrom (AC) in galvanischen, isolierten Einphasen-Wechselstrom (AC), und
- Umwandlung von Dreiphasen-Wechselstrom (AC) in galvanischen, isolierten Dreiphasen-Wechselstrom (AC).

2. Stromversorgungssystem nach Anspruch 1, **dadurch gekennzeichnet, dass** das EVSE-Steuergerät (6) dazu eingerichtet ist, den Stromfluss in wenigstens einen der einen oder mehreren Anschlüsse auf der Primärseite (9b) des Festkörpertransformators (9) zu aktivieren, wenn eine Kopplung zwischen dem entsprechenden Leistungsaufnahmeanschluss auf der Sekundärseite (9b) des Transformators (9) detektiert wird, was die Initiierung des Ladens des Fahrzeugladesystems ermöglicht.

3. Stromversorgungssystem nach Anspruch 1 oder 2, **dadurch gekennzeichnet, dass** der Festkörpertransformator (9) dazu eingerichtet ist, zwei oder mehr der Stromumwandlungen zu ermöglichen, und ferner dass der Festkörpertransformator (9) ein Schaltsystem (9c) umfasst, das ein benutzergesteuertes Schalten zwischen den verschiedenen Stromumwandlungen ermöglicht.

4. Stromversorgungssystem nach einem der vorhergehenden Ansprüche, **dadurch gekennzeichnet, dass** der Festkörpertransformator (9) dazu eingerichtet ist, eine Dreiphasen-Transformation einer ersten Phase-zu-Phase-Wechselspannung (V_{P}) von einer dreiphasigen Primärstromquelle (5) in eine zweite Phase-zu-Phase-Wechselspannung (V_{S}) zu ermöglichen, wobei die zweite Phase-zu-Phase-Wechselspannung (V_{S}) entsprechend dem Dreiphasen-Wechselstrom eingestellt wird, der zum Laden einer oder mehrerer Batterien in dem Fahrzeugladesystem benötigt wird.

5. Stromversorgungssystem nach Anspruch 4, **dadurch gekennzeichnet, dass** die dreiphasige Primärstromquelle (5) ein Stromverteilungssystem vom Typ eines IT-Erdungssystems (5) ist.

6. Stromversorgungssystem nach einem der vorhergehenden Ansprüche, **dadurch gekennzeichnet, dass** das EVSE-Steuergerät (6) Überwachungsmittel (20) umfast, die dazu eingerichtet sind, physikalische Parameter zu überwachen, welche die Leistungsfähigkeit des Stromversorgungssystems beschreiben.

7. Stromversorgungssystem nach Anspruch 6, **dadurch gekennzeichnet, dass** die physikalischen Parameter wenigstens eines von Folgendem umfassen:
- Temperatur innerhalb des Festkörpertransformators (9),
- Umgebungstemperatur in der integrierten Einheit (100),
- Luftfeuchtigkeit,
- Primärspannung (V_{P}), die der Primärseite (9a) des Festkörpertransformators (9) zugeführt wird,
- Sekundärspannung (V_{S}), die von der Sekundärseite (9b) des Festkörpertransformators (9) zugeführt wird,
- Erdschluss, verursacht durch eine Störung in der angeschlossenen Primärstromquelle (5) während des Ladens,
- Stromfluss zwischen elektrischen Komponenten innerhalb der integrierten Einheit (100) und
- maximal mögliche Leistungsaufnahme durch das Fahrzeugladesystem, das elektrisch mit der Sekundärseite (9b) des Festkörpertransformators (9) verbunden ist.

8. Stromversorgungssystem nach Anspruch 6 oder 7, **dadurch gekennzeichnet, dass** das EVSE-Steuergerät (6) ferner erste Übertragungsmittel (20) umfasst, die Zugriff auf und Übertragung der physikalischen Parameter an Computer-Netzwerke erlauben.

9. Stromversorgungssystem nach einem der vorhergehenden Ansprüche, **dadurch gekennzeichnet, dass** die Primärstromquelle (5) ein Stromverteilungssystem (5) ist, das Dreiphasenstrom an die integrierte Einheit (100) verteilt, und dass das Stromversorgungssystem ferner umfasst:
- eine dritte Kommunikationsleitung (17), die zwischen dem EVSE-Steuergerät (6) und dem Stromverteilungssystem (5) anschließbar ist, wobei die dritte Kommunikationsleitung (17) Messungen wenigstens einer Eingangsspannung und eines Eingangsstroms an einem Eingangspunkt (18) des Stromverteilungssystems (5) und eine Datenübertragung an das EVSE-Steuergerät (6) erlaubt.

10. Stromversorgungssystem nach einem der vorhergehenden Ansprüche, **dadurch gekennzeichnet, dass** das Stromversorgungssystem ferner umfasst: wenigstens ein Stromkabel (13), das dazu eingerichtet ist, Strom von der Primärstromquelle (5) an die integrierte Einheit (100) zu übertragen, wobei jedes der wenigstens einen Stromkabel (13) wenigstens eine Stromleitung zur Stromübertragung umfasst, und wenigstens eine Datenkommunikationsleitung (17) zur Übertragung von Steuersignalen.

11. Stromversorgungssystem nach einem der vorhergehenden Ansprüche, **dadurch gekennzeichnet, dass** das Stromversorgungssystem ferner umfasst: wenigstens ein Stromkabel (16), das dazu eingerichtet ist, Strom von der integrierten Einheit (100) an das Fahrzeugladesystem zu übertragen, wobei jedes der wenigstens einen Stromkabel (16) wenigstens eine Stromleitung zur Stromübertragung umfasst, und wenigstens eine Datenkommunikationsleitung (19) zur Übertragung von Steuersignalen.

12. Stromversorgungssystem nach Anspruch 10 oder 11, **dadurch gekennzeichnet, dass** die Steuersignale pulsweitenmodulierte (PWM)-Signale sind.

13. Stromversorgungssystem nach einem der Ansprüche 10-12, **dadurch gekennzeichnet, dass** die Datenkommunikationsleitungen (17,19), welche die Übertragung von Steuersignalen von der Primärstromquelle (5) an das Fahrzeugladesystem erlauben, dazu eingerichtet sind, den Festkörpertransformator (9) zu umgehen.

14. Im Speicher einer Steuereinheit gespeichertes Computerprogramm-Produkt, umfassend computerlesbare Befehle, die, wenn sie in die Steuereinheit geladen und dort ausgeführt werden, physikalische Parameter überwachen, welche die Leistungsfähigkeit des Stromversorgungssystems gemäß einem der Ansprüche 1-13 beschreiben.

## Revendications

1. Système d'alimentation électrique destiné à isoler une puissance de charge avant de la fournir à un système de charge de véhicule d'un véhicule alimenté par batterie (10), lequel système comprend :
- un transformateur d'isolation (9) permettant une isolation électrique entre une source d'alimentation primaire (5) et le système de charge de véhicule, lequel transformateur (9) comprend :
∘ un primaire (9a), dans lequel une ou plusieurs bornes du primaire (9a) peuvent être électriquement reliées à la source d'alimentation primaire (5), et
∘ un secondaire (9b), dans lequel une ou plusieurs bornes du secondaire (9b) peuvent être électriquement reliées au système de charge de véhicule,
- un dispositif de commande EVSE (6) pouvant être électriquement relié au système de charge de véhicule,
- une ligne de communication de données (8) connectée au dispositif de commande EVSE (6) et pouvant être connectée au système de charge de véhicule, laquelle ligne de communication de données (8) permet, lorsqu'elle est connectée au système de charge de véhicule :
∘ la transmission de signaux de commande au système de charge de véhicule,
∘ la surveillance de couplage entre le secondaire (9b) et le système de charge de véhicule, et
∘ la surveillance d'au moins un paramètre relatif à l'état de charge du système de charge de véhicule pendant la charge,
**caractérisé en ce que** :
le transformateur d'isolation (9) est un transformateur CA-CA à semi-conducteurs (9) et en outre, **en ce que** le transformateur d'isolation (9) et le dispositif de commande EVSE (6) constituent une unité mobile intégrée (100),
le transformateur CA-CA à semi-conducteurs (9) étant un transformateur triphasé à semi-conducteurs (9) conçu pour permettre une ou plusieurs des conversions de puissance suivantes :
- la conversion d'une tension alternative (CA) monophasée en une tension alternative (CA) triphasée à isolation galvanique,
- la conversion d'une tension alternative (CA) triphasée en une tension alternative (CA) monophasée à isolation galvanique, et
- la conversion d'une tension alternative (CA) triphasée en une tension alternative (CA) triphasée à isolation galvanique.

2. Système d'alimentation électrique selon la revendication 1, **caractérisé en ce que** le dispositif de commande EVSE (6) est conçu pour activer un flux de puissance dans au moins l'une de la borne ou des bornes du primaire (9b) du transformateur à semi-conducteurs (9) lors de la détection d'un couplage entre la borne de réception de puissance correspondante du secondaire (9b) du transformateur (9), ce qui permet un déclenchement de la charge du système de charge de véhicule.

3. Système d'alimentation électrique selon la revendication 1 ou 2, **caractérisé en ce que** le transformateur à semi-conducteurs (9) est conçu pour permettre deux conversions de puissance ou plus, et **en ce que**, en outre, le transformateur à semi-conducteurs (9) comprend un système de commutation (9c) permettant une commutation commandée par l'utilisateur, entre les différentes conversions de puissance.

4. Système d'alimentation électrique selon l'une quelconque des revendications précédentes, **caractérisé en ce que** le transformateur à semi-conducteurs (9) est conçu pour permettre une transformation triphasée d'une première tension alternative entre phases (Vₚ) d'une source d'alimentation primaire triphasée (5) en une seconde tension alternative entre phases (Vₛ), dans lequel la seconde tension alternative entre phases (Vₛ) est réglée en conformité avec la puissance alternative triphasée requise pour charger une ou plusieurs batteries du système de charge de véhicule.

5. Système d'alimentation électrique selon la revendication 4, **caractérisé en ce que** la source d'alimentation primaire triphasée (5) est un système de distribution d'énergie du type système de mise à la terre IT (5).

6. Système d'alimentation électrique selon l'une quelconque des revendications précédentes, **caractérisé en ce que** le dispositif de commande EVSE (6) comprend un moyen de surveillance (20) conçu pour surveiller des paramètres physiques décrivant les performances du système d'alimentation électrique.

7. Système d'alimentation électrique selon la revendication 6, **caractérisé en ce que** les paramètres physiques comprennent au moins l'un des paramètres suivants :
- température à l'intérieur du transformateur à semi-conducteurs (9),
- température ambiante à l'intérieur de l'unité intégrée (100),
- humidité atmosphérique,
- tension primaire (Vₚ) fournie au primaire (9a) du transformateur à semi-conducteurs (9),
- tension secondaire (Vₛ) fournie à partir du secondaire (9b) du transformateur à semi-conducteurs (9),
- défaut à la terre causé par un défaut de la source d'alimentation primaire connectée (5) pendant la charge,
- flux de puissance entre des composants électriques dans l'unité intégrée (100), et
- puissance maximale pouvant être reçue par le système de charge de véhicule électriquement relié au secondaire (9b) du transformateur à semi-conducteurs (9).

8. Système d'alimentation électrique selon la revendication 6 ou 7, **caractérisé en ce que** le dispositif de commande EVSE (6) comprend en outre un premier moyen de transmission (20) permettant l'accès et la transmission des paramètres physiques à des réseaux d'ordinateurs.

9. Système d'alimentation électrique selon l'une quelconque des revendications précédentes, **caractérisé en ce que** :
la source d'alimentation primaire (5) est un système de distribution d'énergie (5) distribuant une puissance triphasée à l'unité intégrée (100), et **en ce que** le système d'alimentation électrique comprend en outre :
- une troisième ligne de communication (17) pouvant être connectée entre le dispositif de commande EVSE (6) et le système de distribution d'énergie (5), laquelle troisième ligne de communication (17) permet des mesures d'au moins une tension d'entrée et un courant d'entrée à un point d'entrée (18) du système de distribution d'énergie (5) et la transmission de données au dispositif de commande EVSE (6).

10. Système d'alimentation électrique selon l'une quelconque des revendications précédentes, **caractérisé en ce que** le système d'alimentation électrique comprend en outre au moins un câble d'alimentation (13) conçu pour transférer de l'énergie de la source d'alimentation primaire (5) à l'unité intégrée (100), dans lequel chacun du au moins un câble d'alimentation (13) comprend au moins une ligne électrique destinée au transfert d'énergie, et au moins une ligne de communication de données (17) destinée au transfert de signaux de commande.

11. Système d'alimentation électrique selon l'une quelconque des revendications précédentes, **caractérisé en ce que** le système d'alimentation électrique comprend en outre au moins un câble d'alimentation (16) conçu pour transférer de l'énergie de l'unité intégrée (100) au système de charge de véhicule, dans lequel chacun du au moins un câble d'alimentation (16) comprend au moins une ligne électrique destinée au transfert d'énergie, et au moins une ligne de communication de données (19) destinée au transfert de signaux de commande.

12. Système d'alimentation électrique selon la revendication 10 ou 11, **caractérisé en ce que** les signaux de commande sont du type signaux à modulation d'impulsions en largeur (PWM).

13. Système d'alimentation électrique selon l'une quelconque des revendications 10 à 12, **caractérisé en ce que** les lignes de communication de données (17, 19) permettant le transfert de signaux de commande de la source d'énergie primaire (5) au système de charge de véhicule sont conçues pour contourner le transformateur à semi-conducteurs (9).

14. Produit-programme d'ordinateur stocké dans la mémoire d'une unité de commande comprenant des instructions lisibles par ordinateur qui, lorsqu'elles sont chargées et exécutées sur l'unité de commande, surveille des paramètres physiques décrivant les performances du système d'alimentation électrique en conformité avec l'une quelconque des revendications 1 à 13.
